# EUROPEAN PATENT SPECIFICATION

(11) **EP 0 380 507 B1**
(45) Date of publication and mention of the grant of the patent: **05.01.1994**
(21) Application number: 88907431.6
(22) Date of filing: 26.08.1988
(51) Int. Cl.: H04N 5/272, H04N 7/18

(54) **A VISION SYSTEM WITH A PICTURE CAPTURE DEVICE AND A PICTURE REPRODUCTION DEVICE**
VIDEOSYSTEM MIT EINER BILDERFASSUNGSANORDNUNG UND EINER BILDWIEDERGABEANORDNUNG
SYSTEME VIDEO EQUIPE D'UN DISPOSITIF POUR CAPTER LES IMAGES ET D'UN DISPOSITIF POUR LES REPRODUIRE

(30) Priority: 27.08.1987 SE 8703315
(43) Date of publication of application: 08.08.1990
(73) Proprietor: SAAB INSTRUMENTS AKTIEBOLAG, 551 11 Jönköping (SE)
(72) Inventor: BERGVALL, Bengt-Allan, S-561 49 Huskvarna (SE)
(74) Representative: Lundquist, Arne
(86) International application number: SE8800437
(87) International publication number: WO8902203

(56) References cited:
- DE-C- 3 146 552
- US-A- 4 148 072
- US-A- 4 589 029

## Description

The present invention relates to a vision system comprising a picture capture device with at least a first camera means and a second camera means, each of which camera means comprises an optical means and an electro-optical detection means, further comprising a picture reproduction device, arranged to simultaneously reproduce pictures from the camera means in at least one display field, the first camera means being arranged to register a first picture with a relatively large first image angle of an object field, the second camera means being arranged to register a second picture, with a smaller second image angle within said first image angle of said object field.

Such a vision system can be used for different types of object fields, such as traffic systems, terrains etc.

In DE - C2 - 31 46 552 a vision system of the type mentioned above is described. It comprises two picture reproduction devices in the form of a first and a second TV-monitor with the same screen sizes. The first TV-monitor reproduces the first picture with the relatively large viewing angle of the object field, that is to say an overview of said object field, whereas the second TV-monitor reproduces the second picture with the smaller viewing angle within said first viewing angle of the object field. This means, that the second TV-monitor shows a portion of the object field at an enlarged scale. There is a frame shown by the first TV-monitor to indicate what portion of the overview is shown, at an enlarged scale by the second TV-monitor. One reason for making this arrangement is, that camera means of the kind mentioned above i e such that are equipped with electro-optical detection means, have limited resolution capability. That capability can be defined as the detectable angle in a detector plane. Electro-optical detection means can be of different types. There are e.g. detection means comprising a number of discrete photoelectric semi-conductor elements. In this case the detectable angle can be calculated, expressed in radians, as the separation, i.e. the distance between the centre of two adjoining semi-conductor elements divided by the focal length in the optical means of the camera means. Also electro-optic detection means with continuous detection surfaces, such as vidicons, have limitations in resolution capability, depending on which method of line scanning is used for the vidicons, and on the limited band width in the corresponding emitted video signal.

The detectable angle in an ordinary eye, depending on the separation between the detector elements rods and cones, is about 150 µR in the yellow spot, i.e. the part of the retina of the eye with the least separation between rods and cones. In direct optical vision systems, such as field-glasses, the optics can be constructed with such precision that the detectable angle can be utilized, i.e. the separation between the detector elements of the eye constitutes the limiting factor. If e.g. the ocular in such a direct optical vision system is designed with an optic angle of 60^{o}, the quotient between that optic angle and the resolution of the eye, i.e. the detectable angle 150 µR, will be 7,000 x. That quotient is about 7 x larger than the corresponding quotient for a camera means of the kind mentioned in the introduction. Such a camera means will therefore give 7 x inferior resolution at the same optic angle as a direct-optic vision system. A middle course is to let the optic angle and resolution of the camera means be smaller than the corresponding data in a direct optical vision system.

The separation between the detector elements rods and cones that exists in the yellow spot of the eye is limited to the yellow spot. The separation increases with increasing optic angle relative to the centre of the yellow spot according to the following table:

| Optic angle relative to yellow spot ^{o} | The separation of the eye rods - cones µR |
|---|---|
| 0 | 150 |
| 5 | 500 |
| 10 | 1,000 |
| 15 | 1,500 |

One can say that the eye has a primary field of view with a good resolution, and a secondary field of view with a less good resolution. The cross-over between the two fields of view is not clear-cut but in practice an optic angle of 5 to 8 degrees may be considered the boundary. The eye has the great advantage that it can be directed towards the part of the field of view of special interest. That part of the field of view is focused on the centre of the yellow spot, where the resolution is the best.

Thus, the vision system suggested in DE- C2 - 31 46 552 tries to overcome the drawback inherent in existing camera means of the type mentioned above by utilizing two TV-monitors. Such a system however, has some drawbacks. The observer has to move his eyes between two screens to keep full control of the overview of the object field as well as of the more closely inspected portion of the object field, which means, that he will have to reorintate himself continously, which is tiring and introduces some degree of uncertainty in the observation.

The object of the present invention is to provide a vision system of the kind mentioned it the introduction, that allows the observer to utilize the resolution of his eye, and allows him, at the same time to keep full control of the overview of the object filed, as well as to get information of a portion of the object field, reproduced with improved resolution.

According to the invention, such a vision system is characterized primarily in that the picture reproduction device is arranged to reproduce the first picture, the second picture replacing to an optional degree that part of the first picture which corresponds to said second image angle, the first and second viewing angles having the same positional relationship to the object field as in the pictures reproduced by the picture reproduction device, the relationship object field extension/picture reproduction extension being the same for the first and the second pictures. By "viewing angle" here is meant the angle of the picture in azimuth as well as in elevation.

In most cases it might be desirable to let the second picture appear without the corresponding part of the first picture showing with any at all appreciable intensity of light, even though such cases are also conceivable.

In a preferred embodiment of the vision system according to the invention the first camera means is controllable in direction, either manually or via a first servo means, which would probably be the most appropriate if the invention is to be fully utilized. The second camera means can be fixed relative to the first camera means, in that case suitably directed towards the centre of the viewing angle of the first camera means, i.e. the first viewing angle. In an advantageous embodiment, the second camera means is, however, controlled in directions, suitably by means of a second servo means, relative to the first camera means, so that the second viewing angle can be chosen anywhere within the first viewing angle.

The picture reproduction device can be designed in many ways within the scope of the invention. It comprises some kind of a picture producing means comprising e.g. cathode-ray tubes, usually with magnetic deflection, or display windows containing liquid crystals or using electro-luminescence. In one embodiment the picture reproduction device comprises a first picture producing means arranged to reproduce said first picture from a first camera means and a second picture producing means arranged to reproduce said second picture from a second camera means, and comprises further a mirror arranged in front of the first picture producing means reflecting the second picture from the second picture producing means.

Such a picture reproduction device can be constructed in different ways. If the mirror is opaque, the second picture producing means and the mirror can be fixed relative to the first picture producing means, the mirror usually covering a central section of the first picture. The mirror may in a suitable embodiment be set at an angle of 45^{o} to the display direction of the first picture producing means and at an angle of 45^{o} to the display direction of the second picture producing means, both of which display directions thereby forming right angles to each other. It is also conceivable that the mirror and the second picture producing means, fixed relative to each other, are movable, so that the second picture can be optionally positioned within the first picture.

Another possibility is to make the mirror semi-opaque, covering the whole first picture, whereby only the second picture producing means need be movably arranged, if it is desirable to have an optional covering of the first picture.

An additional embodiment of the picture reproduction device involves the use of a single cathode-ray tube as a picture producing means. In it a signal processing device and an electron-beam generator in the cathode-ray tube are arranged to alternately show the first and second pictures, respectively, in such a manner that an observer due to the persistence of vision registers the pictures simultaneously.

In another embodiment of the vision system according to the invention the picture reproduction device comprises electronic means arranged to combine signals produced by the first and second camera means into at least one combined signal for producing a combined picture on the display field.

The picture reproduction device can also be so designed that the first and second pictures are reproduced on a display field in the form of a visual picture plane, in which they are separately observable by both eyes of an observer in such a manner that the pictures seem to the observer to coincide due to integration in the observer's brain.

The invention will now be described in more detail with reference to the accompanying drawings, in which:
Figure 1 shows diagrammatically a perspective view of a vision system according to the invention;
Figure 2 shows diagrammatically a plan view of the picture reproduction device in an alternative embodiment of the vision system according to the invention;
Figure 3 shows, similarly, a variant of the picture reproduction device in figure 2;
Figure 4 shows diagrammatically a plan view of an additional embodiment of a picture reproduction device in a vision system according to the invention;
Figure 5 shows a block diagram of an embodiment of the vision system according to the invention with electronic integration of the first and second pictures; whereas
Figure 6 shows diagrammatically a plan view of an embodiment of the vision system according to the invention with integration of the first and second pictures in an observer's brain.

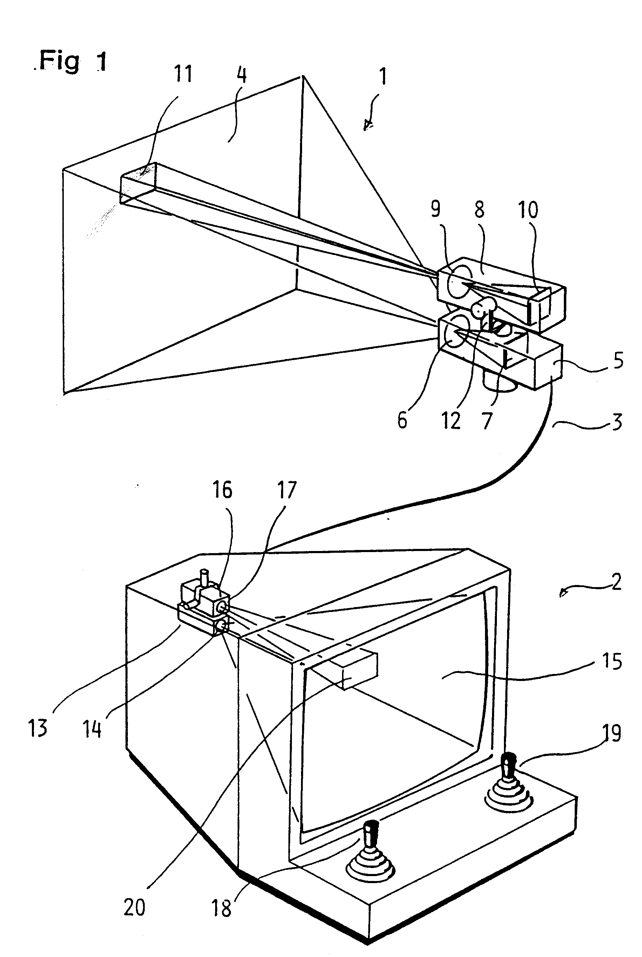

In figure 1 is a vision system shown comprising a picture capture device 1 and a picture reproduction device 2 that are connected to an electric cable 3. The picture capture device is directed towards an object field 4, which may be e.g. a section of terrain or the like. A first camera means 5 comprises a first optical means 6, which is not shown in detail, and a first detection means 7 consisting of a focal plane with a large number of discrete photo-electric semi-conductor elements arranged in two dimensions. The first camera means 5 is mounted so as to be direction controlled via servo-means, not shown, in elevation and azimuth. The servo means are remotely controlled, in this case from the site of the picture reproduction device 2. Said first optical means 6 has an optic angle such that the object field 4 can be observed with the viewing angle of the first camera means 5, i.e. said first viewing angle. As the first camera means is direction controlled, it can naturally be directed towards other object fields, not shown here. A second camera means 8 comprises a second optical means 9, which is not shown in detail, and a second detection means 10, which is similar to the detection means 7. The focal length in the optical means 9 is in that case about 10 x the focal length in the first optical means 6, whereby the viewing angle of the second camera means, i.e. the second viewing angle, will be smaller, to a corresponding degree, than the first viewing angle, and the second camera means can only observe a part section 11 of the object field 4. The second camera means 8 is mounted so as to be directably controlled in elevation and azimuth by means of servo means, not shown, in a support 12, attached to the first camera means 5. Also the last mentioned servo means are remotely controlled from the site of the picture reproduction device 2.

The picture reproduction device 2 comprises a first picture producing means 13 that comprises cathode-ray tubes, here not shown in detail, and a third optical means 14. That first picture producing means 13 is fixed relative to a frosted glass screen 15. A second picture producing means 16 is direction controlled in elevation and azimuth relative to the first picture producing means 13, and have cathode-ray tubes, not shown in detail here, and a fourth optical means 17. The fourth optical means 17 has about 10 x the focal length of the third optical system. The first camera means 5 is directable through a first joy stick 18, which in a manner not shown in detail acts upon the servo means that control the first camera means. The second camera means 8 and similarly the second picture producing means 16 are activated via their servo means, not shown in detail, by a second joy stick 19. The part section 11 in the object field 4 corresponds to a part picture 20 on the frosted glass screen 15. On observing a chosen object field 4 the observer can thus chose a part section 11 which is reproduced by a part picture 20 within the picture of the whole object field 4 that is reproduced on the frosted glass screen 15. The vision system comprises such a signal processing means, not shown, which via the cable 3 receives signals from the two camera means 5 and 8 and via the picture producing means 13 and 16 displays the desired picture on the frosted glass screen 15. The signal processing means is thereby arranged so as to weaken or totally exclude that part of the picture produced in the first picture producing means which is occupied by the part picture 20, so that the latter can be observed with the improved sharpness in as much details permitted by the second and fourth optical means 9 and 17.

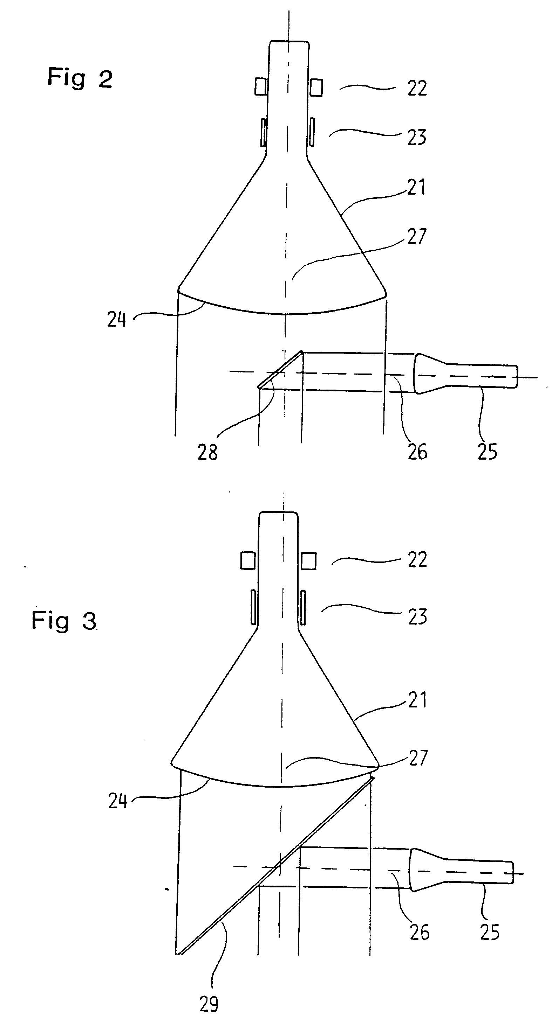

The picture reproduction device in figure 2 is assumed to be connected to the picture capture device of the kind shown in figure 1. It comprises a cathode-ray tube 21 with a focusing coil 22 and deflection coils 23, and a screen 24. That cathode-ray tube displays the picture from a first camera means. A smaller cathode-ray tube 25 is similarly arranged to display the picture from a second camera means, that last-mentioned picture thus constituting a part of the picture from the first camera means. The smaller cathode-ray tube 25 is arranged with its axis of symmetry 26 at right angles to the axis of symmetry 27 of the cathode-ray tube 21. An opaque plane mirror 28 is arranged at an angle of 45^{o} to the axis of symmetry 26 of the smaller cathode-ray tube and is mechanically fixed relative to it. The mirror 28 has an extension such that it reflects only the picture from the cathode-ray tube 25. In the simplest embodiment of that picture producing means the mirror 28 is fixed with its centre on the axis of symmetry 27 of the cathode-ray tube 21. In that case therefore, the picture producing means always displays a picture of an object field with a smaller, central picture section that has a better sharpness in details than the rest of the picture.

In another embodiment of the picture reproduction device according to figure 2, the smaller cathode-ray tube 21 and the mirror 28, the latter being fixed at an angle of 45^{o} to the axis of symmetry 26 of the former, are jointly movably controlled in a manner such that the plane of the mirror 28 always forms an angle of 45^{o} to the axis of symmetry 27 of the cathode-ray tube 21, and such that the mirror 28 can be positioned optionally within the area of the screen 24. The mechanical arrangements of the controlling of the mirror 28 with the cathode-ray tube 25 are not shown, but some kind of controlling with thin metal wires in two coordinates is conceivable. The controlling is in that case co-ordinated with the movements of the second camera means in the picture capture device.

The picture reproduction device in figure 3 comprises the same cathode-ray tube 21 and a smaller cathode-ray tube 25 shown in figure 2. In this embodiment there is a semi-opaque mirror 29, which is set at an angle of 45^{o} to the axis of symmetry 27 of the cathode-ray tube 21, covering the whole screen 24 when observed from the front, i.e. in the direction of the axis of symmetry 27. The cathode-ray tube 25 is directed with its axis of symmetry 26 at right angles to the axis of symmetry 27 and is thus directed at an angle of 45^{o} to the mirror 29. The cathode-ray tube 25 is, with fixed orientation relative to the mirror 29, controllably movable witin the reflection range of the mirror 29, co-ordinated with the corresponding movement of a second camera means that receives the picture shown by the cathode ray tube 25. An observer observing the picture reproduction device in the direction of the axis of symmetry 27 will therefore see that picture which is reproduced on the screen 24 through the semi-opaque mirror 29, however relatively unclearly, whereas the smaller picture from the cathode-ray tube 25 will be seen with full sharpness and with the richness in detail which is the consequence of the optic construction of the second camera means.

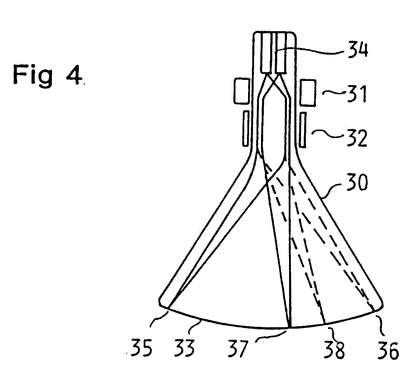

In figure 4 is shown a picture reproduction device that comprises only one single cathode-ray tube 30 with a focusing coil 31 and deflection coils 32 and a screen 33. A not more particularly described electron-beam generator 34 emits alternately respectively an electron-beam for generating a first picture from a first camera means and an electron-beam for generating a second picture from a second camera means of the kind described above, whereby both pictures therefore, due to the persistence of vision can be observed simultaneously. The picture from the first camera means, which thus shows a whole object field, is indicated by ray-path in the boundary positions 35, 36 whereas the picture from a second camera means, showing a section of said object field, is indicated by ray-path in the boundary positions 37, 38. In this embodiment a not shown signal processing means is arranged to process the incoming signals from the first and second camera means, respectively, so that the part of the picture that is shown by the second camera means excludes the corresponding part of the picture of the first camera means. That is effected in a manner in itself known.

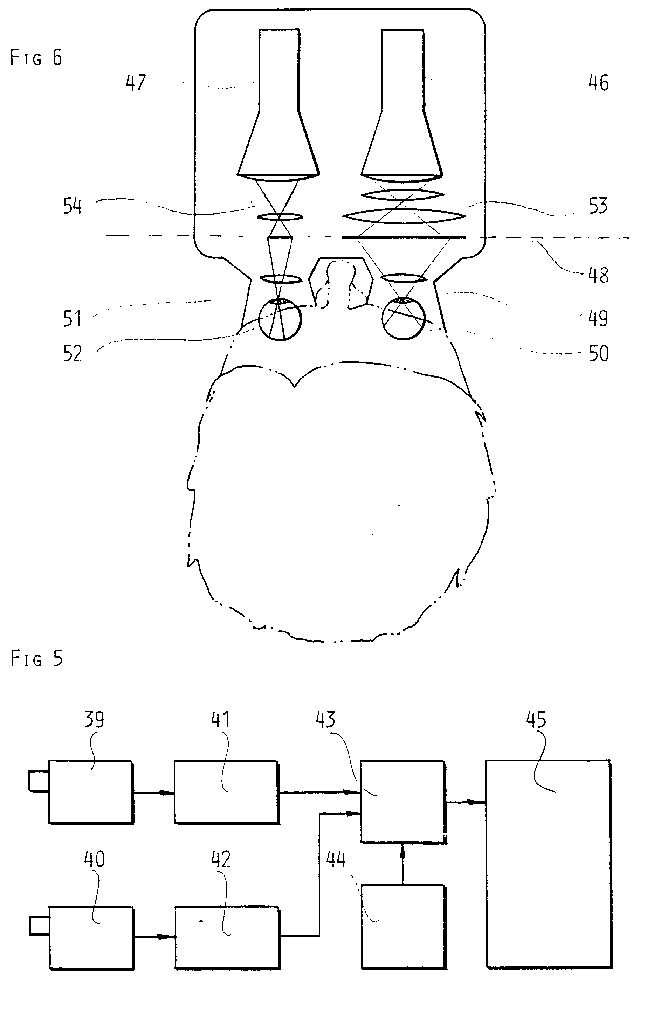

In figure 5 is shown diagrammatically an embodiment of the vision system according to the invention, where the first and second pictures are integrated electronically. In that case a first camera means 39 in the form of a video camera with e.g. the line frequency 15,625 Hz, 50 semi-pictures (frames)/s, connected to a line memory 41 from which a video signal is emitted with 6 repetitively repeated lines with the frequency 93,750 Hz. A second camera means 40 also in the form of a video camera, also with the line frequency 15,625 Hz, 50 frames/s, is connected to a frame memory 42. The line memory 41 and the frame memory 42 are connected to a video gate 43, which is controlled by a gate program generator 44. A video signal is emitted from the video gate 43 to a video motor 45, with a line frequency of 93,750 Hz, 50 frames/s. The different units now co-act so that during the repetitive line scanning the second picture replaces the first one in the position where it is located.

A vision system of that kind requires a monitor with good resolution qualities so that the resolution ability of the eye can be used. In black-and-white such a vision system is feasible.

Integration of the first and second pictures in an observer's brain can be effected in a vision system according to figure 6. In the figure the camera means are not shown, but they are of the same type as those used in e.g. the vision system in figure 1. A first picture producing means in the form of a cathode-ray tube 46 reproduces the first picture in a visual picture plane 48 with the aid of optical means 53. The ray-path is only diagrammatically represented. An observer can with one eye 50 via an ocular means 49 register that first picture with an extension of e.g. 6a. A second picture producing means also in the form of a cathode-ray tube 47 reproduces the second picture in the same visual picture plane 48 with the aid of optical means 54. The observer registers that second picture with the other eye 52 via an ocular means 51. Since the two pictures are being observed separately, each by an eye, they can be integrated into one picture in the observer's brain, in the same manner as when using ordinary binocular field-glasses.

A vision system of that kind is comparatively cheap, but naturally places certain demands on the observer's eyes. They must function well.

## Claims

1. A vision system comprising a picture capture device (1) with at least a first camera means (5) and a second camera means (8), each of which camera means comprises an optic means (6, 9) and an electro-optic detection means (7, 10), further comprising a picture reproduction device (2), arranged so as to simultaneously reproduce pictures from said camera means (5, 8) in at least one display field (15), the first camera means (5) being arranged to register a first picture with a relatively large first viewing angle of an object field (4), the second camera means (8) being arranged to register a second picture, with a smaller second viewing angle (11) within said first viewing angle of said object field (4) so that the second camera means (8) observes only a part section (11) of the object field (4) **characterized** in that the picture reproduction device (2) is arranged to reproduce the first picture, the second picture replacing to an optional degree that part of the first picture which corresponds to said second viewing angle, the first and second viewing angles having the same positional relationship to the object field as in the pictures reproduced by the picture reproduction device (2), the relationship object field extension/picture reproduction extension being the same for the first and the second picture.

2. A vision system according to claim 1, **characterized** in that the picture reproduction device (2) is arranged to principally completely replace that part of the first picture which corresponds to the second viewing angle.

3. A vision system according to claim 1, **characterized** in that the first camera means (5) is direction controlled.

4. A vision system according to claim 3, **characterized** in that the second camera means (8) is fixed relative to the first camera means (5) preferably with said second viewing angle positioned essentially in the centre of said first viewing angle.

5. A vision system according to claim 3, **characterized** in that the second camera means (8) is direction controlled relative to the first camera means (5).

6. A vision system according to any one of claims 3 to 5, **characterized** in that the first camera means (5) and/or the second camera means (8) is arranged to be direction controlled by means of servo means.

7. A vision system according to any one of claims 1 to 6, **characterized** in that the picture reproduction device (2) comprises a first picture producing means (21) arranged to reproduce said first picture from a first camera means (5) and a second picture producing means (25) arranged to reproduce said second picture from a second camera means (8), and comprises further a mirror (28, 29) arranged in front of the first picture producing means (21) reflecting the second picture from the second picture producing means (25).

8. A vision system according to claim 7**, characterized** in that the mirror (28) is opaque.

9. A vision system according to claim 8, **characterized** in that the mirror (28) is fixed relative to the second picture producing means (25), both mirror and picture producing means being jointly controlled to move relative to the first picture producing means (21) in correspondence with the movements of the second camera means (8).

10. A vision system according to claim 7, **characterized** in that the mirror (29) is semi-opaque.

11. A vision system according to claim 10, **characterized** in that the second picture producing means (25) with fixed orientation of its axis of symmetry (26) relative to the mirror (29) is movably controlled within the reflection range of the mirror (29).

12. A vision system according to any one of claims 1 to 5, **characterized** in that the picture reproduction device (2) comprises a cathode-ray tube (30) arranged to alternately display pictures from a first and a second camera means (5, 8), respectively, with an alternation frequency such that an observer, due to the persistence of vision, registers both pictures simultaneously.

13. A vision system according to any one of claims 1 to 6, **characterized** in that the picture reproduction device (2) comprises electronic means (41, 42, 43, 44) arranged to combine signals emitted from the first and second camera means (39, 40) into at least one combined signal for producing a combined picture on the display field (45).

14. A vision system according to any one of claims 1 to 6, **characterized** in that the picture reproduction device (2) comprises a first picture producing means (46) arranged to reproduce said first picture from a first camera means (5) and a second picture producing means (47) arranged to reproduce said second picture from a second camera means (8), the display field being constituted by a visual picture plane (48) in which the reproduced first picture is separately observable through a first ocular means (49) with one eye (50) of an observer and the reproduced second picture is separately observable through a second ocular means (51) with the, other eye (52) of an observer, in such a way that the first and second pictures seem to the observer to coincide due to integration in the observer's brain.

## Patentansprüche

1. Videosystem, umfassend eine Bilderfassungsanordnung (1) mit wenigstens einer ersten Kameraeinrichtung (5) und einer zweiten Kameraeinrichtung (8), wobei jede der Kameraeinrichtungen eine Optikeinrichtung (6, 9) und eine elektrooptische Erkennungseinrichtung (7, 10) sowie eine Bildwiedergabeanordnung (2) zur simultanen Wiedergabe von Bildern der Kameraeinrichtung auf wenigstens einem Anzeigefeld (15) umfaßt, wobei die erste Kameraeinrichtung (5) zur Erfassung eines ersten Bildes mit einem großen ersten Sichtwinkel eines Objektfeldes (4) dient und die zweite Kameraeinrichtung (8) zur Erfassung eines zweiten Bildes mit einem kleineren zweiten Sichtwinkel (11) innerhalb des ersten Sichtwinkels des Objektfeldes (4), so daß die zweite Kameraeinrichtung (8) lediglich einen Teilbereich (11) des Objektfeldes (4) beobachtet, dadurch gekennzeichnet, daß die Bildwiedergabeanordnung (2) zur Wiedergabe des ersten Bildes dient, wobei das zweite Bild bis zu einem wahlweisen Grad den Teil des ersten Bildes ersetzt, der dem zweiten Sichtwinkel entspricht, und wobei der erste und der zweite Sichtwinkel dieselbe positionelle Beziehung zum Objektfeld aufweisen wie in den Bildern, die durch die Bildwiedergabeanordnung (2) wiedergegeben werden, und daß die Beziehung Objektfeldausdehnung /Wiedergabeausdahnung dieselbe für das erste und das zweite Bild ist.

2. Videosystem nach Anspruch 1, dadurch gekennzeichnet, daß die Bildwiedergabeanordnung (2) grundsätzlich zum vollständigen Ersatz das Teils des ersten Bildes dient, der dem zweiten Sichtwinkel entspricht.

3. Videosystem nach Anspruch 1, dadurch gekennzeichnet, daß die erste Kameraeinrichtung (5) richtungssteuerbar ist.

4. Videosystem nach Anspruch 3, dadurch gekennzeichnet, daß die zweite Kameraeinrichtung (8) zur ersten Kameraeinrichtung (5) feststehand ausgebildet ist, vorzugsweise mit im wesentlichen im Zentrum des ersten Sichtwinkels angeordnetem zweiten Sichtwinkel.

5. Videosystem nach Anspruch 3, dadurch gekennzeichnet, daß die zweite Kameraeinrichtung (8) relativ zur ersten Kameraeinrichtung (5) richtungsstauerbar ist.

6. Videosystem nach einem der Ansprüche 3 bis 5, dadurch gekennzeichnet, daß die erste Kameraeinrichtung (5) und/oder die zweite Kameraeinrichtung (8) mittels einer Servoeinrichtung richtungssteuerbar sind bzw. ist.

7. Videosystem nach einem der Ansprüche 1 bis 6, dadurch gekennzeichnet, daß die Bildwiedergabeanordnung (2) eine erste Bilderzeugungseinrichtung (21) zur Wiedergabe des ersten Bildes einer ersten Kameraeinrichtung (5) und eine zweite Bilderzeugungseinrichtung (25) zur Wiedergabe des zweiten Bildes von einer zweiten Kameraeirichtung (8) sowie weiterhin einen Spiegel (28, 29) umfaßt, der vor der ersten Bilderzeugungseinrichtung (21) angeordnet ist und das zweite Bild von der zweiten Bilderzeugungseinrichtung (25) reflektiert.

8. Videosystem nach Anspruch 7, dadurch gekennzeichnet, daß der Spiegel (28) lichtundurchlässig ist.

9. Videosystem nach Anspruch 8, dadurch gekennzeichnet, daß der Spiegel (28) relativ zur zweiten Bilderzeugungseinrichtung (25) festgesetzt ist, wobei sowohl der Spiegel als auch die Bilderzeugungseinrichtung miteinander zur Bewegung relativ zur ersten Bilderzeugungseinrichtung (21) in Übereinstimmung mit den Bewegungen der zweiten Kameraeinrichtung (8) gesteuert werden.

10. Videosystem nach Anspruch 7, dadurch gekennzeichnet, daß der Spiegel (29) halblichtdurchlässig ist.

11. Videosystem nach Anspruch 10, dadurch gekennzeichnet, daß die zweite Bilderzeugungseinrichtung (25) mit fester Ausrichtung ihrer Symmetrieachse (26) relativ zum Spiegel (29) innerhalb des Reflektionsbereichs des Spiegels (29) beweglich gesteuert wird.

12. Videosystem nach einen der Ansprüche 1 bis 5, dadurch gekennzeichnet, daß die Bildwiedergabeanordnung (2) eine Kathodenstrahlröhre (30) zur abwechselnden Darstellung von Bildern von einer ersten und einer zweiten Kameraeinrichtung (5, 8) mit einer wechselnden Frequenz umfaßt, so daß ein Beobachter in Abhängigkeit von der Nachleuchtdauer des Bildes beide Bilder gleichzeitig wahrnimmt.

13. Videosystem nach einem der Ansprüche 1 bis 6, dadurch gekennzeichnet, daß die Bildwiedergabeanordnung (2) Elektronikeinrichtungen (31, 42, 43, 44) zur Kombination der Signale, die von der ersten und zweiten Kameraeinrichtung (39, 40) ausgesendet werden, in wenigstens ein kombiniertes Signal zur Erzeugung eines kombinierten Bildes auf dem Anzeigefeld (45) umfaßt.

14. Videosystem nach einem der Ansprüche 1 bis 6, dadurch gekennzeichnet, daß die Bildwiedergabeanordnung eine erste Bilderzeugungseinrichtung (46) zur Wiedergabe des ersten Bildes von einer ersten Kameraeinrichtung (5) und eine zweite Bilderzeugungseinrichtung (47) zur Wiedergabe des zweiten Bildes von einer zweiten Kameraeinrichtung (8) umfaßt, wobei das Anzeigefeld durch eine visuelle Bildebene (48) gebildet werden, in der das wiedergegebene erste Bild gesondert durch eine erste Okulareinrichtung (49) mit einem Auge das Beobachters und das wiedergegebene zweite Bild gesondert durch eine zweite Okulareinrichtung (51) mit dem anderen Auge des Beobachters derart beobachtbar ist, daß das ersts und zweite Bild dem Beobachter aufgrund der Integration im Gehirn des Beobachters koinzident erscheint.

## Revendications

1. Un système vidéo comprenant un dispositif pour capter les images (1) avec au moins un premier moyen de caméra (5) et un deuxième moyen de caméra (8), chaque moyen de caméra comprenant un moyen optique (6, 9) et un moyen de détection électro-optique (7, 10), et comprenant, en outre, un dispositif de reproduction des images (2), agencé de façon à reproduire simultanément les images à partir desdits moyens de caméra (5, 8) dans au moins un champ d'affichage (15), le premier moyen de caméra (5) étant agencé pour enregistrer une première image avec un premier angle de vision relativement important d'un champ objet (4), le deuxième moyen de caméra (8) étant agencé pour enregistrer une seconde image avec un deuxième angle de vision plus petit (11) dans ledit premier angle de vision dudit champ objet (4) si bien que la deuxième moyen de caméra (8) observe seulement une section partielle (11) du champ objet (4) caractérisé en ce que le dispositif de reproduction d'images (2) est agencé pour reproduire la première image, la deuxième image remplaçant selon un degré facultatif la partie de la première image qui correspond audit deuxième angle de vision, le premier angle et le deuxième angle de vision ayant la même relation de position par rapport au champ objet que dans les images reproduites par le dispositif de reproduction d'images (2), la relation extension du champ objet/extension de la reproduction d'images étant la même pour la première et la deuxième images.

2. Un système vidéo selon la revendication 1, caractérisé en ce que le dispositif de reproduction d'images (2) est agencé pour replacer principalement complètement la partie de la première image qui correspond au deuxième angle de vision.

3. Un système vidéo selon la revendication 1, caractérisé en ce que le premier dispositif de caméra (5) est commandé en direction.

4. Un système vidéo selon la revendication 3, caractérisé en ce que le deuxième moyen de caméra (8) est fixe par rapport au premier moyen de caméra (5) de préférence avec ledit deuxième angle de vision placé essentiellement au centre dudit premier angle de vision.

5. Un système vidéo selon la revendication 3, caractérisé en ce que le deuxième moyen de caméra (8) est commandé en direction par rapport au premier moyen de caméra (5).

6. Un système vidéo selon l'une quelconque des revendications 3 à 5, caractérisé en ce que le premier moyen de caméra (5) et/ou le deuxième moyen de caméra (8) est agencé pour être commandé en direction au moyen d'un servomécanisme.

7. Un système vidéo selon l'une quelconque des revendications 1 à 6, caractérisé en ce que le dispositif de reproduction d'images (2) comprend un premier moyen de production d'images (21) agencé pour reproduire ladite première image à partir d'un premier moyen de caméra (5) et un deuxième moyen de production d'images (25) agencé pour reproduire ladite seconde image à partir du deuxième moyen de caméra (8) et comprend, en outre, un miroir (28, 29) disposé à l'avant du premier moyen de production d'images (21) réfléchissant la deuxième image à partir du deuxième moyen de production d'images (25).

8. Un système vidéo selon la revendication 7, caractérisé en ce que le miroir (28) est opaque.

9. Un système vidéo selon la revendication 8, caractérisé en ce que le miroir (28) est fixe par rapport au deuxième moyen de production d'images (25), tant le miroir que le moyen de production d'images étant commandés conjointement pour se déplacer par rapport au premier moyen de production d'images (21) en correspondance avec les mouvements du deuxième moyen de caméra (8).

10. Un système vidéo selon la revendication 7, caractérisé en ce que le miroir (29) est semi-opaque,

11. Un système vidéo selon la revendication 10, caractérisé en ce que le deuxième moyen de production d'images (25) avec une orientation fixe de son axe de symétrie (26) par rapport au miroir (29) est commandé, de façon mobile dans la plage de réflexion du miroir (29).

12. Un système vidéo selon l'une quelconque des revendications 1 à 5, caractérisé en ce que le dispositif de reproduction d'images (2) comprend un tube à rayons cathodiques (30) agencé pour afficher alternativement les images du premier et du deuxième moyens de caméra (5, 8) respectivement avec une fréquence alternée afin qu'un observateur du fait de la persistence de vision, enregistre simultanément les deux images.

13. Un système vidéo selon l'une quelconque des revendications 1 à 6, caractérisé en ce que le dispositif de reproduction d'images (2) comprend des moyens électroniques (41, 42, 43, 44) agencés pour combiner les signaux émis à partir du premier et deuxième moyens de caméra (39, 40) dans au moins un signal combiné pour produire une image combinée sur le champ d'affichage (45).

14. Un système vidéo selon l'une quelconque des revendications 1 à 6, caractérisé en ce que la dispositif de reproduction d'images (2) comprend un premier moyen de production d'images (2) comprend un premier moyen de production d'images (46) agencé pour reproduire ladite première image à partir d'un premier moyen de caméra (5) et un deuxième moyen de production d'images (47) agencé pour reproduire ladite deuxième image à partir du deuxième moyen de caméra (8), le champ d'affichage étant constitué par un plan d'images visuel (48) dans lequel la première image reproduite est susceptible d'être observée séparément par l'intermédiaire d'un premier oculaire (49) avec un oeil (50) d'un observateur et la deuxième image reproduite est susceptible d'être observée séparément par l'intermédiaire d'un deuxiéme oculaire (51) avec l'autre oeil (52) d'un observateur de telle façon que la première et la deuxième images semblent coïncider à l'observateur on raison de l'intégration dans le cerveau de l'observateur.
